# EUROPEAN PATENT APPLICATION

(11) **EP 4 445 999 A1**
(43) Date of publication of application: **16.10.2024**
(21) Application number: 23194511.4
(22) Date of filing: 31.08.2023
(51) Int. Cl.: B01J 13/00, H01M 50/44, H01M 50/446

(54) **AEROGEL COMPOSITION FOR BATTERY INSULATION SHEET, METHOD OF PREPARING THE SAME, BATTERY INSULATION SHEET FORMED USING THE SAME, AND MANUFACTURING METHOD THEREOF**

(30) Priority: 12.04.2023 KR 20230048178
(71) Applicant: Samsung SDI Co., Ltd., Yongin-si, Gyeonggi-do 17084 (KR)
(72) Inventor: RA, Ha Na, 17084 Yongin-si, Gyeonggi-do (KR); WOO, Myung Heui, 17084 Yongin-si, Gyeonggi-do (KR); RYU, Bo Kyung, 17084 Yongin-si, Gyeonggi-do (KR); PARK, Hye Jin, 17084 Yongin-si, Gyeonggi-do (KR); LEE, Jae Hyun, 17084 Yongin-si, Gyeonggi-do (KR); YANG, Seung Yong, 17084 Yongin-si, Gyeonggi-do (KR)
(74) Representative: Gulde & Partner

(57) **Abstract**

An aerogel composition for a battery insulation sheet is provided. The aerogel composition comprising: a solvent; a fibrous support; an aerogel; and a functional material including a binder, a dispersant, or a combination thereof. With respect to a total solid content of the aerogel composition, the fibrous support is present in a content range of 5 wt% to 70 wt%, the aerogel is present in a content range of 10 wt% to 90 wt%, and the functional material is present in a content range of 0.5 wt% to 20 wt%.

## Description

### BACKGROUND

### 1. Field

Aspects of embodiments of the present disclosure relate to an aerogel composition for a battery insulation sheet, a method of preparing the same, a battery insulation sheet formed using the same, and a method of manufacturing the battery insulation sheet.

### 2. Description of Related Art

Secondary batteries are power storage systems that can provide high energy density by converting electrical energy into chemical energy and storing the chemical energy. As compared with non-rechargeable (or primary) batteries, secondary batteries are rechargeable and, thus, are widely used in IT devices, such as smartphones, cellular phones, laptop computers, and tablet personal computers (PCs). Recently, to reduce environmental pollution, interest in electric vehicles has increased, and high-capacity secondary batteries have been adopted for use in electric vehicles. Such secondary batteries are required to have certain characteristics, such as high density, high output power, and stability.

When a plurality of high-capacity cells, such as lithium ion secondary batteries, are included in a battery module or pack, thermal runaway of one cell due to overheating for various reasons may adversely affect other, adjacent cells. Thus, adjacent cells should be thermally insulated from each other.

Conventionally, a plate material, an insulating resin plate, or the like has been disposed between adjacent cells to insulate and thermally insulate them from each other.

The above information disclosed in this Background section is for enhancement of understanding of the background of the present disclosure, and therefore, it may contain information that does not constitute the related (or prior) art.

### SUMMARY

An embodiment of the present disclosure provides an aerogel composition having an excellent heat insulation property, excellent durability, and low dusting, a method of preparing the same, a battery insulation sheet formed using the same, and a method of manufacturing the battery insulation sheet.

The invention is defined by the appended claims. The description that follows is subjected to this limitation. Any disclosure lying outside the scope of said claims is only intended for illustrative as well as comparative purposes.

A battery insulation sheet manufactured with the aerogel composition, according to embodiments of the present disclosure, may have an excellent heat insulation property and excellent durability, manufacturing process costs thereof may be low, and at the same time, the aerogel may be prevented from dusting during a manufacturing process and during actual use.

### BRIEF DESCRIPTION OF THE DRAWINGS

FIG. 1 is a schematic diagram illustrating a battery insulation sheet between a plurality of cells according to one embodiment.
FIGS. 2 and 3 are schematic diagrams illustrating a structure of a battery insulation sheet according to various embodiments.

### DETAILED DESCRIPTION

Hereinafter, embodiments will be described, in detail, so that the present disclosure can be easily practiced by a person of ordinary skill in the art. However, embodiments may be embodied in many different forms and should not be construed as limited to the embodiments set forth herein.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) reffering to the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

A heat insulating material is a material that prevents the flow (or transfer) of heat from a high heat place (or element) to a low heat place (or element) and is used not only in refrigerators, refrigeration warehouses, and building construction but also in various industries, including aircraft, electronic components, and vehicle industries.

A heat insulating material should have excellent heat insulation performance through low thermal conductivity and should have mechanical strength to continuously maintain its heat insulation property.

An aerogel is a transparent or semi-transparent high-tech material having a nano-porous structure and has high potential as a heat insulating material due to certain of its characteristics, such as very low density and low thermal conductivity, and is being evaluated as a very efficient super heat insulating material that could be usable in various industrial fields.

In addition, the aerogel has lower thermal conductivity than conventional organic heat insulating materials, such as expanded polystyrene foam (Styrofoam^{®}), and the aerogel may be fireproof or fire-retardant, overcoming a problem with organic heat insulating materials in that they are vulnerable to fire and emit harmful gas when exposed to high heat or fire.

However, generally, the aerogel is relatively very weak in strength and, thus, is easily broken even by a small impact due to its high brittleness. Further, because it is difficult to process the aerogel to have a very thin thickness and shape, it is very difficult to prepare a heat insulating material using the aerogel alone (or by itself) despite its excellent heat insulation performance.

An aerogel composition, according to one embodiment of the present invention, includes a solvent, a fibrous support, an aerogel, and a functional material including a binder, a dispersant, or a combination thereof. With respect to the total solid content of the aerogel composition, the fibrous support is included in a content of (or an amount of) 5 wt% to 70 wt%, the aerogel is included in a content of 10 wt% to 90 wt%, and the functional material is included in a content of 0.5 wt% to 20 wt%. The contents of the fibrous support, the aerogel, and the functional material add up to 100 wt%.

A battery insulation sheet manufactured with the aerogel composition including the above components may have an excellent heat insulation property and excellent durability, manufacturing process costs thereof may be low, and at the same time, aerogel dust may be prevented from being generated during a manufacturing process and during actual use.

In one embodiment, the solvent may include at least one selected from the group consisting of a polar solvent and a non-polar solvent.

The polar solvent may include water, an alcohol-based solvent, or a combination thereof.

The water may include, for example, purified water, deionized water, or a combination thereof.

The alcohol-based solvent may include, for example, at least one selected from the group consisting of methanol, ethanol, propanol, pentanol, butanol, hexanol, ethylene glycol, propylene glycol, diethylene glycol, and glycerol.

The non-polar solvent may include a hydrocarbon-based solvent. For example, the hydrocarbon-based solvent may include at least one selected from the group consisting of hexane, pentane, heptane, toluene, and benzene. The hydrocarbon-based solvent is, in one embodiment, an alkane solvent, such as hexane or a mixture including the alkane solvent.

The solvent may include water. When water is used as the solvent, raw material costs and post-processing costs can be effectively reduced. However, when water is used as a solvent, mixing with a hydrophobic aerogel is not easy, and in one embodiment, a mixing operation design, a mixing condition, the addition and amount of a binder and a dispersant, and the like have been controlled to uniformly disperse the aerogel. In this way, when the aerogel is uniformly dispersed in a composition, without using a large amount of binder, it is possible to form a thin battery insulation sheet having an excellent heat insulation property, excellent durability, and a low dusting property.

The solvent may be included such that a weight ratio of a content of the solvent to the total solid content of the aerogel composition is in a range of about 1:1 to about 1:90. For example, the solvent may be included such that the weight ratio of the content of the solvent to the total solid content of the aerogel composition is in a range of about 1:50 to about 1:70, about 1:20 to about 1:30, or about 1:2 to about 1:10. The weight ratio of the content of the solvent to the total solid content may be controlled to be within the above range to control viscosity and coat an aerogel layer.

In one embodiment, because the fibrous support is included in the aerogel composition, the durability of a battery insulation sheet formed using the aerogel composition may be improved.

The fibrous support may include a fiber used as a support of a conventional heat insulating material. For example, the fibrous support may include at least one selected from the group consisting of a natural fiber, a silica fiber, a glass fiber, a carbon fiber, a graphite fiber, a mineral fiber, and a polymer fiber. In one embodiment, the fibrous support may include a glass fiber.

The natural fiber may include, for example, at least one selected from the group consisting of hemp, jute, flax, coir, kenaf, and cellulose.

The mineral fiber may be, for example, a mineral fiber including at least one selected from the group consisting of basalt, wollastonite, alumina, silica, slag, and rock.

The polymer fiber may include, for example, at least one selected from the group consisting of nylon, polyimide, polyamide, polybenzimidazole, polybenzoxazole, polyamide-imide, polyethylene terephthalate, polybutylene terephthalate, polyester, polyethylene (PE), and polypropylene (PP). In one embodiment, the polymer fiber may include at least one of polyimide, polyamide, and polybenzimidazole.

The fibrous support may be, for example, in the form of wool or chopped strand.

The fibrous support may have, for example, a length of about 50 µm to about 1,000 µm, about 70 µm to about 800 µm, or about 100 µm to about 600 µm. When the aerogel composite includes the fibrous support having a length within the above range, the aerogel layer can be firmly formed and durability can be improved.

The fibrous support may have, for example, a diameter of about 0.1 µm to about 20 µm, about 0.1 µm to about 15 µm, about 0.1 µm to about 5 µm, about 1 µm to about 15 µm, or about 3 µm to about 10 µm. When the aerogel composite includes the fibrous support having a diameter within the above range, a structure of the aerogel layer can be strengthened and manufacturing costs can be reduced.

The content of the fibrous support may be in a range of about 25 wt% to about 60 wt%, or about 30 wt% to about 50 wt% with respect to the total solid content of the aerogel composition. When a battery insulation sheet is manufactured with the aerogel composition including the fibrous support within the above range, the durability of the battery insulation sheet can be improved.

In one embodiment, the aerogel may have a Brunauer-Emmett-Teller (BET) specific surface area of about 500 m²/g to about 1,000 m²/g. For example, the aerogel may have a BET specific surface area of about 500 m²/g to about 950 m²/g, about 550 m²/g to about 950 m²/g, or about 600 m²/g to about 900 m²/g. When the aerogel composition includes the aerogel having a BET specific surface area value within the above range, an insulation sheet capable of effectively preventing heat transfer and heat propagation between a plurality of cells can be provided.

The aerogel may have an average particle diameter (D50) of about 5 µm to about 200 µm, about 10 µm to about 100 µm, or about 20 µm to about 50 µm. When the aerogel composition includes the aerogel having a particle diameter within the above range, a heat insulation property is improved, thereby delaying heat transfer between a plurality of (e.g., adjacent) cells. The average particle diameter (D50) of the particles may be measured by laser diffraction (LD). The method may be performed according to ISO 13320-1. According to the IUPAC definition, the equivalent diameter of a non-spherical particle is equal to a diameter of a spherical particle that exhibits identical properties to that of the investigated non-spherical particle.

The content of the aerogel may be in a range of about 30 wt% to about 70 wt%, or about 40 wt% to about 60 wt% with respect to the total solid content of the aerogel composition. When a battery insulation sheet is manufactured with the aerogel composition including the aerogel within the above range, the heat insulation property of the battery insulation sheet can be improved.

In one embodiment, the binder may include an aqueous polymer binder. For example, the aqueous polymer binder may include at least one selected from the group consisting of an aqueous polymer, an anionic water-soluble polymer, a cationic water-soluble polymer, and a water-dispersible polymer.

The aqueous polymer may include, for example, at least one selected from the group consisting of polyvinyl alcohol, polyethylene oxide, polyacrylamide, and polyvinylpyrrolidone.

The anionic water-soluble polymer may include at least one selected from the group consisting of polymers having functional groups of a carboxylic acid, a sulfonic acid, a sulfuric acid ester, a phosphoric acid ester, and a salt thereof. For example, the anionic water-soluble polymer may be a polymer having a carboxylic acid group, and in one embodiment, the anionic water-soluble polymer may include a polymaleic acid.

The cationic water-soluble polymer may include at least one selected from the group consisting of polymers having functional groups of amine, ammonium, phosphonium, sulfonium, and a salt thereof. For example, the cationic water-soluble polymer may be a polymer having an amine group, and in one embodiment, the cationic water-soluble polymer may include at least one selected from the group consisting of polyethylene amine and polyamine.

The water-dispersible polymer may include at least one selected from the group consisting of water-dispersible polyurethane and water-dispersible polyester.

The binder may include an aqueous polymer and a water-dispersible polymer. For example, the binder may include an aqueous polymer having a binder characteristic and a dispersion property and water-dispersible polyurethane having a fire resistance property, and in one embodiment, the binder may include polyvinyl alcohol and water-dispersible polyurethane.

A weight ratio of the aqueous polymer and the water-dispersible polymer may be in a range of about 1:1 to about 1:5, about 1:1 to about 1:4, or about 1:2 to about 1:3. When the aqueous polymer and the water-dispersible polymer are mixed and used in a weight ratio within the above range, it is possible to further improve the fire resistance and mechanical properties as well as the heat insulation property, the dusting property, and the compressive property of an insulation sheet.

The content of the binder may be in a range of about 0.5 wt% to about 20 wt%, about 2 wt% to about 15 wt%, or about 8 wt% to about 15 wt% with respect to the total solid content of the aerogel composition. When a battery insulation sheet is manufactured with the aerogel composition including the binder within the above range, the dusting property of the battery insulation sheet may be improved.

In one embodiment, the dispersant may include at least one selected from the group consisting of a surfactant and a phosphate-based salt. In one embodiment, the dispersant may include at least one selected from among a nonionic surfactant, an anionic surfactant, an amphoteric surfactant, a natural surfactant, such as lecithin, and phosphate.

When the dispersant is further included, the dispersion of the aerogel in a composition is further improved, thereby uniformly dispersing the fibrous support and the aerogel.

The content of the dispersant may be in a range of about 0.1 wt% to about 6 wt%, about 0.1 wt% to about 5 wt%, or about 0.1 wt% to about 3 wt% with respect to the total solid content of the aerogel composition. When the dispersant is included within the above range, the aerogel composition can be manufactured at low costs and a battery insulation sheet having an excellent heat insulation property, excellent durability, and a dusting property can be manufactured by using the aerogel composition.

The binder and the dispersant may be included in a weight ratio of about 1:0.001 to about 1:0.67, about 1:0.001 to about 1:0.5, or about 1:0.001 to about 1:0.3. When the binder and the dispersant are mixed in a weight ratio within the above range, the aerogel may be more uniformly dispersed in the aerogel layer.

In one embodiment, with respect to the total solid content of the aerogel composition, the fibrous support may be included in a content of about 25 wt% to about 60 wt%, the aerogel may be included in a content of about 30 wt% to about 70 wt%, and the binder may be included in a content of about 2 wt% to about 15 wt%, wherein the contents of the fibrous support, the aerogel, and the binder add up to 100 wt%.

In one embodiment, with respect to the total solid content of the aerogel composition, the fibrous support may be included in a content of about 30 wt% to about 50 wt%, the aerogel may be included in a content of about 40 wt% to about 60 wt%, and the binder may be included in a content of about 8 wt% to about 15 wt%, wherein the contents of the fibrous support, the aerogel, and the binder add up to 100 wt%. When the aerogel composition is formed within the above range, excellent heat insulation property and improved durability are provided and a binding force between the fibrous support and the aerogel is improved, thereby reducing or preventing the generation of dust.

In one embodiment, with respect to the total solid content of the aerogel composition, the fibrous support may be included in a content of about 25 wt% to about 60 wt%, the aerogel may be included in a content of about 30 wt% to about 70 wt%, the binder may be included in a content of about 2 wt% to about 15 wt%, and the dispersant may be included in a content of about 0.1 wt% to about 5 wt%, wherein the contents of the fibrous support, the aerogel, the binder, and the dispersant add up to 100 wt%.

In one embodiment, with respect to the total solid content of the aerogel composition, the fibrous support may be included in a content of about 30 wt% to about 50 wt%, the aerogel may be included in a content of about 40 wt% to about 60 wt%, the binder may be included in a content of about 5 wt% to about 10 wt%, and the dispersant may be included in a content of about 0.1 wt% to about 3 wt%, wherein the contents of the fibrous support, the aerogel, the binder, and the dispersant add up to 100 wt%. When the aerogel composition is formed within the above range, it is possible to improve the dispersibility of the aerogel, provide an excellent heat insulation property, and improve durability and a binding force between the fibrous support and the aerogel may be improved, thereby reducing or preventing the generation of dust.

In one embodiment, the aerogel composition may further include a silane-based compound. The silane-based compound may include, for example, at least one selected from the group consisting of 3-(trimethoxysilyl)propyl methacrylate, methyltriethoxysilane, methyltrimethoxysilane, ethyltrimethoxysilane, octadecyltrimethoxysilane, ethyltriethoxysilane, and (3-glycidoxypropyl)trimethoxysilane. When the silane-based compound is further included, dispersibility can be further improved.

In one embodiment, the aerogel composition may further include an additive, such as a wetting agent, an emulsifier, a compatibilizer, a viscosity modifier, a pH modifier, a stabilizer, an antioxidant, an acidic or basic capture reagent, a metal deactivator, an antifoaming agent, an antistatic agent, a thickener, an adhesion promoter, a binding agent, a flame retardant, an impact modifier, a pigment, a dye, a colorant, or a deodorizer.

A method of preparing an aerogel composition, according to one embodiment of the present invention, includes mixing a functional material, including a binder, a dispersant, or a combination thereof, into a solvent to prepare a solvent mixture; mixing the solvent mixture and an aerogel to prepare an aerogel mixture; and mixing the aerogel mixture and a fibrous support to prepare an aerogel composition. With respect to the total solid content of the aerogel composition, the fibrous support is included in a content of about 5 wt% to about 70 wt%, the aerogel is included in a content of about 10 wt% to about 90 wt%, and the functional material is included in a content of about 0.5 wt% to about 20 wt%. The contents of the fibrous support, the aerogel, and the functional material add up to 100 wt%.

In the mixing of the functional material in the solvent to prepare the solvent mixture, the binder may be mixed into the solvent or the binder and the dispersant may be mixed into the solvent. The solvent, the binder, and the dispersant as referenced here may be the same as those described above and, thus, repeat descriptions thereof are omitted.

In the mixing of the solvent mixture and the aerogel to prepare the aerogel mixture, the aerogel may be introduced in the form of powder. Again, the aerogel referenced here may be the same as in the above description and, thus, a repeat description thereof is omitted.

In the mixing of the aerogel mixture and the fibrous support to prepare the aerogel composition, the fibrous support referenced here may be the same as the above description and, thus, a repeat description thereof is omitted.

In each of the mixing of the functional material including the binder, the dispersant, or the combination thereof into the solvent to prepare the solvent mixture, the mixing of the solvent mixture and the aerogel to prepare the aerogel mixture, and the mixing of the aerogel mixture and the fibrous support to prepare the aerogel composition, during mixing, the mixing may be performed using a mixer. For example, the mixer may include a planetary mixer or a centrifugal mixer (e.g., a Thinky^{®} mixer) and the like.

In one embodiment, when the solvent mixture and the aerogel are mixed, the planetary mixer may be used. When the solvent mixture and the aerogel are mixed using the planetary mixer, the aerogel may be uniformly dispersed in the solvent.

The planetary mixer may be a device that is usable to mix or agitate different materials to prepare a homogeneous mixture. The planetary mixer may include a blade configured for planetary motion.

In one embodiment, the planetary mixer may include one or more planetary blades and one or more high-speed dispersion blades. In one embodiment, the planetary mixer may include one or more planetary blades and one or more high-speed dispersion blades.

The planetary blades and the high-speed dispersion blades continuously rotate about axes thereof. A rotation speed may be expressed in a unit of rotations per minute (rpm).

In one embodiment, the planetary mixer may include a first blade and a second blade having different rotational axes. For example, the first blade may be a low-speed blade, and the second blade may be a high-speed blade. Here, a low speed and a high speed are relative rotation speeds between the first blade and the second blade. In one embodiment, the first blade may be an open blade, and the second blade may be a despa blade.

A rotation speed of the first blade may be, for example, in a range of about 10 rpm to about 100 rpm, about 10 rpm to about 60 rpm, or about 30 rpm to about 70 rpm. In addition, a rotation speed of the second blade may be, for example, in a range of about 100 rpm to about 2,000 rpm, about 100 rpm to about 1,000 rpm, about 300 rpm to about 1,700 rpm, or about 500 rpm to about 1,700 rpm.

When the functional material is added to the solvent and mixed, the rotation speed of the first blade of the mixer may be in a range of about 10 rpm to about 60 rpm, about 20 rpm to about 50 rpm, or about 30 rpm to about 40 rpm, and the rotation speed of the second blade may be in a range of about 300 rpm to about 1,700 rpm, about 600 rpm to about 1,000 rpm, or about 700 rpm to about 800 rpm. When the solvent and the functional material are mixed as described above, the solvent mixture in which the binder, the dispersant, or the combination thereof is uniformly dispersed may be prepared to more easily mix the aerogel in a subsequent operation.

When the solvent mixture and the aerogel are mixed, the rotation speed of the first blade of the mixer may be in a range of about 30 rpm to about 70 rpm, about 40 rpm to about 70 rpm, or about 60 rpm to about 70 rpm, and the rotation speed of the second blade may be in a range of about 500 rpm to about 1,700 rpm, about 600 rpm to about 1,600 rpm, or about 800 rpm to about 1,500 rpm. When the aerogel is added to the solvent mixture and mixed as described above, the aerogel can be prevented from being agglomerated, thereby inducing uniform dispersion.

When the aerogel mixture and the fibrous support are mixed, the rotation speed of the first blade of the mixer may be in a range of about 10 rpm to about 60 rpm, about 20 rpm to about 50 rpm, or about 30 rpm to about 40 rpm, and the rotation speed of the second blade may be in a range of about 300 rpm to about 1,700 rpm, about 400 rpm to about 1,500 rpm, or about 800 rpm to about 1,200 rpm. As described above, when the aerogel mixture and the fibrous support are mixed, bubbles in a composition are removed, viscosity is adjusted, and the fibrous support is easily dispersed between the uniformly dispersed aerogels so that the aerogel may surround the fibrous support in the composition. Here, the binder may be present between the aerogel and the fibrous support to improve a binding force between the aerogel and the fibrous support.

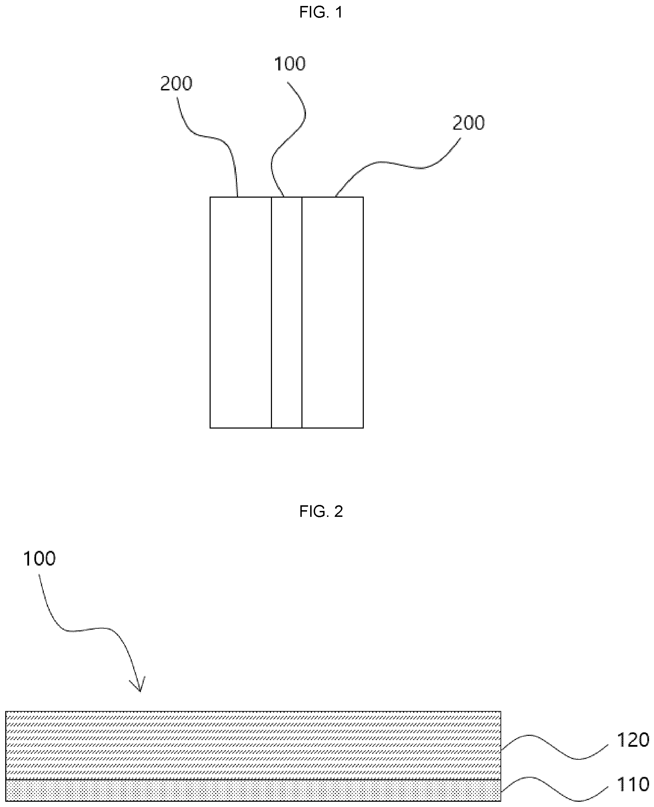

FIG. 1 is a schematic diagram illustrating a battery insulation sheet formed (or arranged) between a plurality of cells according to one embodiment.

Referring to FIG. 1, a battery insulation sheet 100, according to one embodiment, may be formed between cells (e.g., secondary battery cells) 200 in a battery module including a plurality of the cells 200. Here, each of upper and lower surfaces (e.g., the left and right surfaces in FIG. 1) of the battery insulation sheet 100 may be arranged to face one of adjacent cells 200. The battery insulation sheet 100, according to one embodiment, is formed between the plurality of cells 200 to prevent or block a flame in one cell 200 from advancing to the adjacent cell 200 to suppress the propagation of the flame to other cells as much as possible, thereby providing a battery module having increased safety and a battery pack including the same.

FIG. 2 is a schematic diagram illustrating a structure of the battery insulation sheet 100 according to one embodiment.

Referring to FIG. 2, the battery insulation sheet 100 may include a substrate 110 and an aerogel layer 120 formed on the substrate 110. Each of the upper and lower surfaces of the battery insulation sheet 100 may be disposed to face one of adjacent cells 200 (see, e.g., FIG. 1).

Because the aerogel layer 120 is formed on the substrate 110 by using an aerogel composition according to one embodiment, the battery insulation sheet 100 may have improved durability as well as an improved heat insulation property, and when the battery insulation sheet 100 is manufactured or installed inside a device, an aerogel can be prevented from falling out and generating dust.

In the battery insulation sheet 100, a specific description of the aerogel composition for providing the aerogel layer 120 may be the same as the above description and, thus, will not be repeated.

The substrate 110 may include, for example, various materials, such as a resin, a metal, an inorganic material other than a metal, or a composite thereof, but a type thereof is not limited. In addition, the substrate 110 may be in the form of a film, a thin film, or a sheet, but the form thereof is not particularly limited.

The resin of the substrate 110 may include, for example, at least one selected from the group consisting of polyethylene, polypropylene, polystyrene, polyethylene terephthalate, and polyamide.

The metal of the substrate 110 may include, for example, at least one selected from the group consisting of copper, nickel, cobalt, iron, chromium, vanadium, palladium, ruthenium, rhodium, molybdenum, tungsten, iridium, silver, gold, and platinum. When the substrate 110 is made of the metal material, the substrate 110 may be subjected to anti-corrosion treatment, insulation treatment, or the like.

The inorganic material of the substrate 110 may include at least one selected from the group consisting of calcium carbonate (CaCO₃), talc, and mica.

In one embodiment, the substrate may include an inorganic material, such as mica. In such an embodiment, the heat insulation property, durability, and the like of the battery insulation sheet 100 is improved.

In one embodiment, the aerogel layer 120 may have a single layer structure or a multi-layer structure. When the aerogel layer 120 has a multi-layer structure, the aerogel layer may be formed as (e.g., may include) 2 to 10 layers, 2 to 7 layers, or 2 to 5 layers.

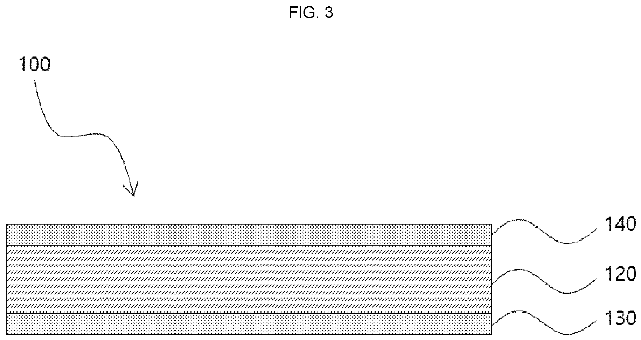

FIG. 3 is a schematic diagram illustrating a structure of a battery insulation sheet 100 according to another embodiment.

Referring to FIG. 3, in one embodiment, the battery insulation sheet 100 may have a structure including a first substrate 130, an aerogel layer 120 formed on the first substrate 130, and a second substrate 140 formed on the aerogel layer 120. Here, each of the first substrate 130 and the second substrate 140 may be disposed to face one of adjacent cells 200 (see, e.g., FIG. 1). The first substrate 130 and the second substrate 140 may be formed of the same material or different materials.

A method of manufacturing a battery insulation sheet, according to one embodiment, may include coating the aerogel composition on a substrate; and drying the aerogel composition coated on the substrate. Here, the substrate may be the substrate 110 shown in FIG. 2 or any one of the first substrate 130 and the second substrate 140 shown in FIG. 3.

In the method of manufacturing a battery insulation sheet, detailed descriptions of the substrate and the aerogel composition may be the same as those described above and thus, will not be repeated.

The coating may be performed by applying an aerogel slurry on the substrate.

The coating may be repeated once or twice or more.

The drying may be performed in a temperature condition of, for example, about 25°C to about 100°C, about 45°C to about 90°C, or about 60°C to about 85°C. When the drying is performed in the above temperature condition, the substrate and the aerogel layer can be prevented from being detached from each other, a strong aerogel layer can be formed on the substrate without a separate adhesive member or adhesive, and a coating layer can be formed in a shape in which an aerogel is coated around a plurality of dispersed fibrous supports.

In one embodiment, the method of manufacturing a battery insulation sheet may further include, before the drying, stacking a substrate (e.g., the second substrate 140) on the coated aerogel composition. In such an embodiment, a battery insulation sheet may be manufactured in a structure in which, without an adhesive layer, a plurality of substrates, for example, the first substrate 130 and the second substrate 140 shown in FIG. 3 are formed on both surfaces (e.g., opposite surfaces) of the aerogel layer 120.

A battery insulation sheet can be manufactured through a relatively simple method of coating the aerogel composition, according to one embodiment, on a substrate and drying the aerogel composition without using a separate adhesive or providing an adhesive layer. The aerogel can be uniformly dispersed so that, even when it has a thin thickness, an excellent heat insulation property, excellent durability, and a low dusting property can be achieved.

Hereinafter, specific Examples of the present disclosure will be described. However, the Examples described below are provided as examples for explaining the present disclosure, and accordingly, the present disclosure is not limited to the following Examples. Contents which are not described here may be fully inferred by those skilled in the art, and descriptions of such content will be omitted.

### Manufacturing of battery insulation sheet

### Example 1

### 1. Preparation of aerogel composition

Polyvinyl alcohol (manufactured by Sigma-Aldrich Co., LLC), as a binder, was added to ultrapure water as a solvent and mixed in a planetary mixer with an open blade rotating at 30 rpm and a despa blade rotating at 700 rpm to prepare a solvent mixture. Then, an aerogel having a BET value of 800 m²/g was added to the solvent mixture and mixed with the open blade rotating at 70 rpm and the despa blade rotating at 1,500 rpm to prepare an aerogel mixture. Glass wool was added to the aerogel mixture and mixed with the open blade rotating at 30 rpm and the despa blade rotating at 1,200 rpm to prepare an aerogel composition. Here, during mixing, the planetary mixer PT-005, manufactured by DNTEK Co., Ltd. was used.

In the resulting prepared aerogel, the solid content of the prepared aerogel composition included 50 wt% of the aerogel, 40 wt% of the glass wool, and 10 wt% of the polyvinyl alcohol.

### 2. Manufacturing of battery insulation sheet

The prepared aerogel composition was applied on a mica sheet (muscovite, manufactured by Pamica Electric Material (Hubei) Co., Ltd.) having a thickness of 0.1 mm as a slurry. Then, the mica sheet, having a thickness of 0.1 mm, was stacked in a sandwich type and then coated through a roll rolling method. Then, the stacked mica sheet was dried at a temperature of 60°C for 24 hours to form an aerogel layer and to manufacture a battery insulation sheet. The manufactured battery insulation sheet had a final, total thickness of 1.38 mm.

### Example 2

A battery insulation sheet was manufactured in the same manner as in Example 1, except that, when the aerogel composition was prepared, input amounts of raw materials in Example 1 were adjusted to prepare an aerogel composition with a solid content including 60 wt% of aerogel, 25 wt% of glass wool, and 15 wt% of polyvinyl alcohol.

### Example 3

A battery insulation sheet was manufactured in the same manner as in Example 1, except that, when the aerogel composition was prepared, input amounts of raw materials in Example 1 were adjusted to prepare an aerogel composition with a solid content including 65 wt% of aerogel, 25 wt% of glass wool, and 10 wt% of polyvinyl alcohol.

### Example 4

A battery insulation sheet was manufactured in the same manner as in Example 1, except that, when the aerogel composition was prepared, input amounts of raw materials in Example 1 were adjusted to prepare an aerogel composition with a solid content including 45 wt% of aerogel, 50 wt% of glass wool, and 5 wt% of polyvinyl alcohol.

### Example 5

A battery insulation sheet was manufactured in the same manner as in Example 1, except that, when the aerogel composition was prepared, water-dispersible polyurethane was used instead of polyvinyl alcohol as a binder in Example 1.

### Example 6

### 1. Preparation of aerogel composition

Polyvinyl alcohol (manufactured by Sigma-Aldrich Co., LLC), as a binder, and a surfactant (Triton-X100 manufactured by Sigma-Aldrich Co., LLC), as a dispersant, were added to ultrapure water as a solvent and mixed in a planetary mixer with an open blade rotating at 30 rpm and a despa blade rotating at 700 rpm to prepare a solvent mixture. Then, an aerogel having a BET value of 800 m²/g was added to the solvent mixture and mixed with the open blade rotating at 70 rpm and the despa blade rotating at 1,500 rpm to prepare an aerogel mixture. Glass wool was added to the aerogel mixture and mixed with the open blade rotating at 30 rpm and the despa blade rotating at 1,200 rpm to prepare an aerogel composition. Here, during mixing, the planetary mixer PT-005, manufactured by DNTEK Co., Ltd. was used.

In the prepared aerogel composition, the solid content of the prepared aerogel composition included 50 wt% of the aerogel, 40 wt% of the glass wool, 9.9 wt% of the polyvinyl alcohol, and 0.1 wt% of the dispersant. 2. Manufacturing of battery insulation sheet

The prepared aerogel composition was applied on a mica sheet (muscovite, manufactured by Pamica Electric Material (Hubei) Co., Ltd.) having a thickness of 0.1 mm as a slurry. Then, the mica sheet having a thickness of 0.1 mm was stacked in a sandwich type and coated through a roll rolling method. Then, the stacked mica sheet was dried at a temperature of 60°C for 24 hours to form an aerogel layer and to manufacture a battery insulation sheet. The manufactured battery insulation sheet had a final, total thickness of 1.38 mm.

### Example 7

### 1. Preparation of aerogel composition

Polyvinyl alcohol (manufactured by Sigma-Aldrich Co., LLC), as a binder, water-dispersible polyurethane, and a surfactant (Triton-X100 manufactured by Sigma-Aldrich Co., LLC), as a dispersant, were added to ultrapure water as a solvent and mixed in a planetary mixer in which an open blade rotated at 30 rpm and a despa blade rotated at 700 rpm to prepare a solvent mixture. Then, an aerogel having a BET value of 800 m²/g was added to the solvent mixture and mixed with the open blade rotating at 70 rpm and the despa blade rotating at 1,500 rpm to prepare an aerogel mixture. Glass wool was added to the aerogel mixture and mixed with the open blade rotating at 30 rpm and the despa blade rotating at 1,200 rpm to prepare an aerogel composition. Here, during mixing, the planetary mixer PT-005, manufactured by DNTEK Co., Ltd., was used.

In the prepared aerogel composition, the solid content of the prepared aerogel composition included 50 wt% of the aerogel, 40 wt% of the glass wool, 3 wt% of the polyvinyl alcohol, 6.9 wt% of the water-dispersible polyurethane, and 0.1 wt% of the dispersant. 2. Manufacturing of battery insulation sheet

The prepared aerogel composition was applied on a mica sheet (muscovite, manufactured by Pamica Electric Material (Hubei) Co., Ltd.) having a thickness of 0.1 mm as a slurry, and then, the mica sheet, having a thickness of 0.1 mm, was stacked in a sandwich type and coated through a roll rolling method. Then, the stacked mica sheet was dried at a temperature of 60°C for 24 hours to form an aerogel layer and to manufacture a battery insulation sheet. The manufactured battery insulation sheet had a final, total thickness of 1.38 mm.

### Comparative Example 1

A battery insulation sheet was manufactured in the same manner as in Example 1, except that, when the aerogel composition was prepared, input amounts of raw materials in Example 1 were adjusted to prepare an aerogel composition with a solid content including 50 wt% of aerogel, 49.7 wt% of glass wool, and 0.3 wt% of polyvinyl alcohol.

### Comparative Example 2

A battery insulation sheet was manufactured in the same manner as in Example 1, except that, when the aerogel composition was prepared, input amounts of raw materials in Example 1 were adjusted to prepare an aerogel composition with a solid content including 40 wt% of aerogel, 35 wt% of glass wool, and 25 wt% of polyvinyl alcohol.

### Experimental Examples

### Experimental Example 1: Evaluation of heat insulation property

A heat insulation property was evaluated by using the insulation sheets prepared in Examples 1 to 7 and Comparative Examples 1 and 2.

Each of the insulation sheets was placed between a pair of 1 mm-thick aluminum plates facing each other and placed on a heat press. An upper plate of the heat press was heated to a temperature of 350°C, and a lower plate of the heat press was maintained at a start temperature of 40°C without being heated. Then, a pressure of 20 kN was applied to the lower plate of the heat press and, when eleven minutes had elapsed, a temperature of the lower plate of the heat press was measured and shown in Table 1 below.

### Experimental Example 2: Evaluation of dusting property

A dusting property was evaluated by using the insulation sheets prepared in Examples 1 to 7 and Comparative Examples 1 to 2.

A weight of each of the insulation sheets was measured before evaluation. Then, the insulation sheet was placed on a rubber plate and a total of five points, such as vertices and a center of the insulation sheet, were regularly hit with a rubber mallet. Then, dust was swept off and the weight of the insulation sheet was measured. Subsequently, the weight before the physical impacts was compared with the weight after the physical impacts to calculate a weight reduction ratio. Results thereof are shown in Table 1 below.

**Table 1**

| | Examples | | | | | | | Comparative Examples | |
|---|---|---|---|---|---|---|---|---|---|
| | 1 | 2 | 3 | 4 | 5 | 6 | 7 | 1 | 2 |
| Temperature of lower plate (°C) | 85.2 | 85.7 | 83.6 | 86.1 | 86.6 | 84.5 | 83.2 | 86.6 | 97.6 |
| Weight reduction ratio (%) | 1.7 | 1.5 | 2.3 | 2.5 | 2.8 | 1.3 | 0.8 | 4.8 | 5.7 |

Referring to Table 1, in Examples 1 to 7, it can be confirmed that both the heat insulation property and the dusting property were excellent. Here, regarding Examples 1 to 4, changes in heat insulation property and dusting property according to a component content of the aerogel composition can be confirmed. In addition, in Example 5, because a dispersant does not as a fire-resistant binder, it can be seen that its dusting property was slightly reduced but the heat insulation property was impacted. In addition, regarding Example 6 in which the binder and dispersant were mixed, it can be confirmed that the heat insulation property and the dusting property were further improved. In addition, regarding Example 7 in which polyvinyl alcohol and the water-dispersible polyurethane-based binder were mixed, it can be confirmed that the heat insulation property and the dusting property were further improved.

Meanwhile, in Comparative Example 1, it can be confirmed that a compressive property and a dusting property were reduced according to the control of a component content of the aerogel composition. In addition, in Comparative Example 2, it can be confirmed that the heat insulation and compressive properties were considerably reduced due to a low content of an aerogel content and high contents of a fibrous support and a binder.

Therefore, when the aerogel composition according to embodiments of the present disclosure were tested, it can be confirmed that a heat insulation property, durability, and a low dusting property were excellent.

## Claims

1. An aerogel composition for a battery insulation sheet, the aerogel composition comprising:
a solvent;
a fibrous support;
an aerogel; and
a functional material including a binder, a dispersant, or a combination thereof,
wherein, with respect to a total solid content of the aerogel composition, the fibrous support is present in a content range of 5 wt% to 70 wt%, the aerogel is present in a content range of 10 wt% to 90 wt%, and the functional material is present in a content range of 0.5 wt% to 20 wt%, wherein the contents of the fibrous support, the aerogel, and the functional material add up to 100 wt%.

2. The aerogel composition of claim 1, wherein the solvent comprises at least one selected from the group consisting of a polar solvent and a non-polar solvent.

3. The aerogel composition of claim 1 or 2, wherein a weight ratio of the content of the solvent to the total solid content of the aerogel composition is in a range of 1:1 to 1:90.

4. The aerogel composition of any one of the preceding claims, wherein the fibrous support comprises at least one selected from the group consisting of a natural fiber, a silica fiber, a glass fiber, a carbon fiber, a basalt fiber, and a polymer fiber.

5. The aerogel composition of any one of the preceding claims, wherein the aerogel has a Brunauer-Emmett-Teller (BET) specific surface area in a range of 500 m²/g to 1,000 m²/g.

6. The aerogel composition of any one of the preceding claims, wherein the binder comprises an aqueous polymer binder, and
wherein the aqueous polymer binder comprises at least one selected from the group consisting of an aqueous polymer, an anionic water-soluble polymer, a cationic water-soluble polymer, and a water-dispersible polymer.

7. The aerogel composition of any one of the preceding claims, wherein the binder is present in a content range of 0.5 wt% to 20 wt% with respect to the total solid content of the aerogel composition.

8. The aerogel composition of any one of the preceding claims, wherein the binder comprises an aqueous polymer and a water-dispersible polymer, and
wherein the aqueous polymer and the water-dispersible polymer are present in a weight ratio in a range of 1:1 to 1:5.

9. The aerogel composition of any one of the preceding claims, wherein the dispersant comprises at least one selected from the group consisting of a surfactant and a phosphate-based salt.

10. The aerogel composition of any one of the preceding claims, wherein the dispersant is present in a content range of 0.1 wt% to 6 wt% with respect to the total solid content of the aerogel composition.

11. The aerogel composition of any one of the preceding claims, wherein the binder and the dispersant are present in a weight ratio range of 1:0.001 to 1:0.67.

12. A method of preparing an aerogel composition for a battery insulation sheet, the method comprising:
mixing a functional material comprising a binder, a dispersant, or a combination thereof into a solvent to prepare a solvent mixture;
mixing the solvent mixture and an aerogel to prepare an aerogel mixture; and
mixing the aerogel mixture and a fibrous support to prepare an aerogel composition,
wherein, with respect to a total solid content of the aerogel composition, the fibrous support is present in a content range of 5 wt% to 70 wt%, the aerogel is present in a content range of 10 wt% to 90 wt%, and the functional material is present in a content range of 0.5 wt% to 20 wt%, wherein the contents of the fibrous support, the aerogel, and the functional material add up to 100 wt%.

13. A battery insulation sheet comprising:
a substrate; and
an aerogel layer on the substrate, the aerogel layer being the aerogel composition of claim 1.

14. A method of manufacturing a battery insulation sheet, the method comprising:
coating the aerogel composition of claim 1 onto a substrate; and
drying the aerogel composition coated on the substrate.

15. The method of claim 14, wherein, during the drying of the aerogel composition coated on the substrate, a drying temperature is in a range of 25°C to 100°C.

## Amended claims

### Amended claims in accordance with Rule 137(2) EPC.

1. An aerogel composition for a battery insulation sheet, the aerogel composition comprising:
a solvent;
a fibrous support;
an aerogel; and
a functional material including a binder, a dispersant, or a combination thereof,
wherein, with respect to a total solid content of the aerogel composition, the fibrous support is present in a content range of 5 wt% to 70 wt%, the aerogel is present in a content range of 10 wt% to 90 wt%, and the functional material is present in a content range of 0.5 wt% to 20 wt%, wherein the contents of the fibrous support, the aerogel, and the functional material add up to 100 wt%,
wherein the binder comprises an aqueous polymer binder, and
the aqueous polymer binder comprises at least one selected from the group consisting of an aqueous polymer, an anionic water-soluble polymer, a cationic water-soluble polymer, and a water-dispersible polymer, and
wherein the aerogel has an average particle diameter (D50) of 5 µm to 200 µm measured by laser diffraction (LD) according to ISO 13320-1.

2. The aerogel composition of claim 1, wherein the solvent comprises at least one selected from the group consisting of a polar solvent and a non-polar solvent.

3. The aerogel composition of claim 1 or 2, wherein a weight ratio of the content of the solvent to the total solid content of the aerogel composition is in a range of 1:1 to 1:90.

4. The aerogel composition of any one of the preceding claims, wherein the fibrous support comprises at least one selected from the group consisting of a natural fiber, a silica fiber, a glass fiber, a carbon fiber, a basalt fiber, and a polymer fiber.

5. The aerogel composition of any one of the preceding claims, wherein the aerogel has a Brunauer-Emmett-Teller (BET) specific surface area in a range of 500 m²/g to 1,000 m²/g.

6. The aerogel composition of any one of the preceding claims, wherein the binder is present in a content range of 0.5 wt% to 20 wt% with respect to the total solid content of the aerogel composition.

7. The aerogel composition of any one of the preceding claims, wherein the binder comprises an aqueous polymer and a water-dispersible polymer, and
wherein the aqueous polymer and the water-dispersible polymer are present in a weight ratio in a range of 1:1 to 1:5.

8. The aerogel composition of any one of the preceding claims, wherein the dispersant comprises at least one selected from the group consisting of a surfactant and a phosphate-based salt.

9. The aerogel composition of any one of the preceding claims, wherein the dispersant is present in a content range of 0.1 wt% to 6 wt% with respect to the total solid content of the aerogel composition.

10. The aerogel composition of any one of the preceding claims, wherein the binder and the dispersant are present in a weight ratio range of 1:0.001 to 1:0.67.

11. A method of preparing an aerogel composition for a battery insulation sheet, the method comprising:
mixing a functional material comprising a binder, a dispersant, or a combination thereof into a solvent to prepare a solvent mixture;
mixing the solvent mixture and an aerogel to prepare an aerogel mixture; and
mixing the aerogel mixture and a fibrous support to prepare an aerogel composition,
wherein, with respect to a total solid content of the aerogel composition, the fibrous support is present in a content range of 5 wt% to 70 wt%, the aerogel is present in a content range of 10 wt% to 90 wt%, and the functional material is present in a content range of 0.5 wt% to 20 wt%, wherein the contents of the fibrous support, the aerogel, and the functional material add up to 100 wt%,
wherein the binder comprises an aqueous polymer binder, and
the aqueous polymer binder comprises at least one selected from the group consisting of an aqueous polymer, an anionic water-soluble polymer, a cationic water-soluble polymer, and a water-dispersible polymer, and
wherein the aerogel has an average particle diameter (D50) of 5 µm to 200 µm measured by laser diffraction (LD) according to ISO 13320-1.

12. A battery insulation sheet comprising:
a substrate; and
an aerogel layer on the substrate,
the aerogel layer being the aerogel composition of claim 1.

13. A method of manufacturing a battery insulation sheet, the method comprising:
coating the aerogel composition of claim 1 onto a substrate; and
drying the aerogel composition coated on the substrate.

14. The method of claim 13, wherein, during the drying of the aerogel composition coated on the substrate, a drying temperature is in a range of 25°C to 100°C.
